# DEMANDE DE BREVET EUROPEEN

(11) **EP 2 708 917 A1**
(43) Date de publication de la demande: **19.03.2014**
(21) Numéro de dépôt: 13183879.9
(22) Date de dépôt: 11.09.2013
(51) Int. Cl.: G01S 19/01, G01S 19/02, G01S 19/21, G01S 5/00

(54) **Authentification de signaux GNSS**

(30) Priorité: 18.09.2012 FR 1258745
(71) Demandeur: Centre National d'Etudes Spatiales, 75039 Paris Cedex 01 (FR); France Developpement Conseil Sarl, 94300 Vincennes (FR)
(72) Inventeur: Jeannot, Marc, 31450 Pompertuzat (FR); Allien, Alexandre, 94800 Villejuif (FR); Schielin, Emmanuel, 75012 Paris (FR); Taillandier, Christophe, 94130 Nogent Sur Marne (FR); Brocard, Daniel, 31130 Balma (FR)
(74) Mandataire: Office Freylinger

(57) **Abrégé**

L'invention repose sur une vérification délocalisée de l'authenticité des signaux GNSS, contrairement à une vérification autonome effectuée par le récepteur GNSS qui reçoit les signaux directement des satellites. Par conséquent, l'invention comprend plusieurs volets. D'une part, elle comprend un procédé mis en oeuvre sur un récepteur GNSS d'utilisateur qui permet à celui-ci d'envoyer une requête d'authentification des signaux GNSS qu'il reçoit à un centre d'authentification. D'autre part, elle comprend un procédé mis en oeuvre par le centre d'authentification, qui a pour but de vérifier l'authenticité des signaux GNSS reçus par des récepteurs d'utilisateurs.

## Description

### Domaine technique

La présente invention concerne l'authentification de signaux GNSS.

### Etat de la technique

Les systèmes de positionnement par satellites (aussi appelés GNSS - acronyme du terme anglais « Global Navigation Satellite System ») ont un impact grandissant dans notre société. Se positionner rapidement et simplement sur une carte est maintenant perçu comme une capacité acquise, ordinaire. La carte routière, par exemple, est progressivement remplacée par un récepteur GNSS.

La position calculée par le récepteur GNSS n'est cependant pas fiable : en effet, rien ne garantit a priori ni l'intégrité (capacité du récepteur à détecter que l'erreur de positionnement dépasse un seuil fixé, et cela en un temps limité) de la mesure, ni son authenticité (garantie que le système ne subit aucun leurrage.) Différentes méthodes ont été développées dans le monde de l'aviation civile afin de garantir l'intégrité des mesures GNSS, par exemple l'algorithme RAIM (« Receiver Autonomous Integrity Monitoring » - Surveillance d'intégrité autonome du récepteur.)

En ce qui concerne l'authenticité des signaux reçus, le Département du Transport des Etats-Unis publia en 2001 le rapport Volpe (John A. Volpe National Transportation Systems Center for the U.S. Department of Transportation, « Vulnerability Assessment of the Transportation Infrastructure Relying on the Global Positioning System, » Final Report 2001), rapport mettant en garde les autorités américaines sur l'impact grandissant du GPS dans les infrastructures civiles et sur sa vulnérabilité aux attaques. Parmi ces attaques, le rapport met particulièrement en lumière les dangers d'une attaque à base de « spoofing » (en français « leurrage »). Cette attaque consiste à tromper un récepteur GPS sur son calcul de position, vitesse et temps (en bref : « PVT ») en lui faisant poursuivre des signaux contrefaits. Face à cette menace de leurrage, différentes méthodes visant à authentifier les signaux de radionavigation traités par le récepteur et entrant dans la solution PVT ont été proposées.

Le document WO 2010/105136 A1 décrit un système d'authentification de signaux GPS dans lequel le récepteur GPS estime les bribes (en anglais : « chips ») du code W, qui multiple le code P pour donner le code crypté P(Y), et les compare aux bribes (présumées) exactes du code W qui lui sont communiquées par une voie de communication sécurisée. Le récepteur conclut à l'authenticité des signaux reçus ou à un leurrage en fonction de la statistique de corrélation entre les bribes estimées et les bribes (présumées) exactes du code W. Ce système requiert une infrastructure pour diffuser le code W. Afin que le code W diffusé ne puisse pas être utilisé pour faire du leurrage, il doit être diffusé en retard par rapport au code W sur les signaux GPS. Comme mode de réalisation alternatif de l'invention, le document WO 2010/105136 A1 mentionne la possibilité de remplacer les bribes (présumées) exactes du code crypté par des estimées réalisées sur une deuxième fréquence. Cette alternative présuppose l'utilisation d'un récepteur bi-fréquence et la présence du code crypté sur au moins deux signaux GNSS à des fréquences différentes.

Dans le procédé décrit dans le document US 7,679,552 B2, deux récepteurs GPS sont combinés et coopèrent pour, entre autres, valider ou rejeter l'intégrité des signaux GPS.

L'article « Signal Authentication - A Secure Civil GNSS for Today, » Sherman Lo, David de Lorenzo, Per Enge, Dennis Akos et Paul Bradley, InsideGNSS, Septembre/Octobre 2009, pp. 30-39, décrit un procédé d'authentification de signaux GNSS, dans lequel un récepteur d'utilisateur et une station de référence prennent des « clichés » des signaux reçus à l'endroit respectif. Un « cliché » correspond à un jeu de données numériques représentant une bande de fréquences contenant le signal ouvert GPS C/A et le signal GPS crypté P(Y), l'un en quadrature de phase par rapport à l'autre, enregistrée pendant un certain intervalle de temps. Le récepteur d'utilisateur transmet son « cliché » à la station de référence qui évalue la corrélation entre les composantes en quadrature de phase de deux clichés en glissant la fenêtre de corrélation. Si un pic de corrélation est détecté, on déduit que les signaux sont authentiques. On présuppose que les deux récepteurs ne sont pas leurrés par le même attaquant.

### Objet de l'invention

Un objectif de la présente invention est de proposer une approche d'authentification améliorée.

### Description générale de l'invention

L'invention repose sur une vérification délocalisée de l'authenticité des signaux GNSS, contrairement à une vérification autonome effectuée par le récepteur GNSS qui reçoit les signaux directement des satellites. Par conséquent, l'invention comprend plusieurs volets. D'une part, elle comprend un procédé mis en oeuvre sur un récepteur GNSS d'utilisateur qui permet à celui-ci d'envoyer une requête d'authentification des signaux GNSS qu'il reçoit à un centre d'authentification. D'autre part, elle comprend un procédé mis en oeuvre par le centre d'authentification, qui a pour but de vérifier l'authenticité des signaux GNSS reçus par des récepteurs d'utilisateurs.

La méthode d'authentification de signaux GNSS requiert l'émission, par les satellites GNSS, d'un premier signal GNSS et d'un deuxième signal GNSS sur une même fréquence porteuse, les premier et deuxième signaux GNSS étant en quadrature de phase l'un par rapport à l'autre et au moins un des signaux étant un signal crypté, c.-à-d. un signal comprenant un code d'étalement crypté. Cette condition est remplie p.ex. sur le GPS (signaux C/A et P(Y) de la fréquence L1) et sur le GNSS européen Galileo (signaux OS et PRS de la fréquence L1). Une modification des signaux GNSS déjà utilisés ou planifiés n'est donc pas nécessaire pour la mise en oeuvre de l'invention. Dans le cadre du présent document, un signal de radionavigation (ou signal GNSS) désigne un signal modulé sur la fréquence porteuse et comprenant un code d'étalement, celui-ci étant éventuellement modulé par une sous-porteuse et/ou des données (du message de navigation).

Le principe de la méthode repose sur la non-reproductibilité du signal crypté par une personne malintentionnée. Le signal crypté étant émis en quadrature de l'autre signal, la modification de celui-ci par un attaquant aura un impact sur le signal crypté. On utilise cette propriété pour distinguer un signal d'origine d'une version contrefaite.

Selon le premier volet de l'invention, un récepteur de géopositionnement (récepteur GNSS dans la suite) exécute un procédé de traitement de signaux de radionavigation, comprenant
○ la réception d'une bande de radiofréquences contenant un mélange de signaux de radionavigation en provenance d'une pluralité de satellites, à chaque fois un premier signal de radionavigation et un second signal de radionavigation crypté provenant d'un même satellite et modulant une même fréquence porteuse en quadrature de phase l'un par rapport à l'autre ;
○ la numérisation du mélange de signaux de radionavigation de sorte à produire un segment de données numériques représentant un intervalle de temps du mélange de signaux de radionavigation à la réception ; et
○ la production d'une information d'horodatage du segment de données numériques.

On note que la numérisation du mélange de signaux de radionavigation doit être effectuée à un rythme d'échantillonnage suffisamment élevé pour représenter toute la bande de fréquences dans le domaine numérique. La largeur de la bande de radiofréquence est choisie de sorte à ce que la plus grande partie (p.ex. plus de 70 %) de la puissance des premiers et seconds signaux de radionavigation y soit contenue, respectivement.

Selon l'invention, l'information d'horodatage est indicative des temps d'émission, sur les différents satellites de la pluralité de satellites, des signaux de radionavigation reçus pendant ledit intervalle de temps. L'horodatage ne renseigne donc pas - ou du moins pas uniquement - l'heure de la réception mais tient compte du fait qu'à cause des différents temps de propagation entre les satellites et le récepteur GNSS l'intervalle de temps unique du mélange de signaux de radionavigation à la réception correspond à différents intervalles de temps d'émission sur les différents satellites. L'information d'horodatage est conçue de sorte à indiquer (directement ou indirectement) les différents temps d'émission. Cette information d'horodatage permettra au centre d'authentification de vérifier l'authenticité des signaux GNSS reçus par le récepteur GNSS. De préférence, le procédé comprend donc la transmission du segment de données numériques et de l'information d'horodatage à ce centre d'authentification.

De préférence, la production de l'information d'horodatage comprend :
○ la lecture d'une information de temps d'émission contenue dans le message de navigation du premier signal de radionavigation de chaque satellite de la pluralité de satellites et
○ pour chaque satellite de la pluralité de satellites, la détermination d'un décalage entre l'intervalle de temps représenté par le segment de données numériques et le message de navigation respectif. Cette détermination peut être réalisée par comptage des bribes du code d'étalement entre un premier instant de référence du message de navigation (p.ex. le début ou la fin) et un second instant de référence (p.ex. le début ou la fin) de l'intervalle de temps représenté par le segment de données numériques.

Selon un mode de réalisation avantageux du premier volet de l'invention, le procédé comprend la composition d'un paquet de données, comprenant le segment de données numériques, ladite information d'horodatage, et une identification des satellites de ladite pluralité de satellites desquels le récepteur GNSS a reçu les signaux. Le paquet de données peut ensuite être envoyé (crypté ou en clair) à un centre d'authentification pour la vérification de la cohérence des composantes du paquet de données. Il sera apprécié que l'inclusion de l'identification des satellites facilite le traitement des demandes d'authentification par le centre d'authentification. Le procédé au niveau du récepteur GNSS peut comprendre la réception d'une réponse du centre d'authentification indiquant si les signaux de radionavigation sont authentiques ou non.

Avantageusement, pour chaque satellite de la pluralité de satellites, une valeur indicative du décalage Doppler des signaux en provenance du satellite respectif et/ou un rapport signal à bruit pour le premier signal en provenance du satellite respectif sont déterminés. Ces valeurs indicatives du décalage Doppler et/ou les rapports signal à bruit peuvent être inclus dans le paquet de données que le récepteur GNSS transmet au centre d'authentification. Comme l'identification des satellites, les valeurs indicatives du décalage Doppler et les rapports signal à bruit facilitent le processus d'authentification mis en oeuvre par le centre d'authentification.

De préférence, le récepteur GNSS détermine une information de position, de vitesse et/ou de temps (PVT) sur la base au moins des premiers signaux de radionavigation. Le cas échéant, l'information PVT peut être incluse dans le paquet de données.

Un aspect de la présente invention concerne un récepteur de signaux de radionavigation (récepteur GNSS) configuré pour la mise en oeuvre du procédé selon le premier volet de l'invention. Un tel récepteur comprend :
○ un étage HF pour recevoir une bande de radiofréquences contenant un mélange de signaux de radionavigation en provenance d'une pluralité de satellites, à chaque fois un premier signal de radionavigation et un second signal de radionavigation crypté provenant d'un même satellite et modulant une même fréquence porteuse en quadrature de phase l'un par rapport à l'autre ;
○ un convertisseur analogique-numérique configuré pour numériser le mélange de signaux de radionavigation de sorte à produire un segment de données numériques représentant un intervalle de temps du mélange de signaux de radionavigation à la réception ;
○ un étage d'acquisition et de poursuite au moins des premiers signaux de radionavigation ; et
○ un étage de traitement numérique configuré pour lire une information de temps d'émission contenue dans le message de navigation du premier signal de radionavigation de chaque satellite de ladite pluralité de satellites et pour déterminer, pour chaque satellite de ladite pluralité de satellites, un décalage entre l'intervalle de temps représenté par le segment de données numériques et le message de navigation respectif.
Le récepteur est configuré (p.ex. programmé) pour produire une information d'horodatage du segment de données numériques, l'information d'horodatage étant indicative des temps d'émission, sur les différents satellites de la pluralité de satellites, des signaux de radionavigation reçus pendant ledit intervalle de temps.

De préférence, le récepteur comprend des moyens de télécommunication pour transmettre un paquet de données, contenant le segment de données numériques, l'information d'horodatage et une identification des satellites de la pluralité de satellites, à un centre d'authentification pour la vérification de la cohérence des composantes du paquet de données et pour recevoir une réponse du centre d'authentification indiquant si les signaux de radionavigation sont authentiques ou non.

Selon le second volet de l'invention, un centre d'authentification exécute un procédé de vérification de l'authenticité de signaux GNSS reçus par un récepteur GNSS. Ce procédé comprend :
○ la réception, de la part du récepteur GNSS ou d'un tiers, par une voie de télécommunication, d'un segment de données numériques ainsi que d'une information d'horodatage du segment de données numériques produites dans le récepteur GNSS selon le procédé selon le premier volet de l'invention ;
○ la génération, à l'aide d'un module cryptographique, d'une réplique du code d'étalement du second signal de radionavigation crypté émis par un satellite GNSS au temps d'émission indiqué par l'information d'horodatage ;
○ l'évaluation d'une fonction de corrélation entre le segment de données numériques et la réplique du code d'étalement du second signal de radionavigation crypté ; et
○ la décision quant à l'authenticité des signaux GNSS reçus par le récepteur GNSS sur la base du résultat de l'évaluation de la fonction de corrélation.

Le segment de données numériques ainsi que l'information d'horodatage du segment de données numériques peuvent être reçus dans un paquet de données comprenant en outre une identification des satellites de la pluralité de satellites desquels le récepteur GNSS a reçu des signaux GNSS et, optionnellement, une valeur indicative du décalage Doppler des signaux en provenance du satellite respectif et/ou, pour chaque satellite de ladite pluralité de satellites, un rapport signal à bruit pour le premier signal en provenance du satellite respectif.

De préférence, le procédé exécuté par le centre d'authentification comprend la transmission, au récepteur GNSS ou au tiers ayant introduit la requête d'authentification, d'une réponse indiquant si les signaux de radionavigation sont authentiques ou non.

Un centre d'authentification configuré pour exécuter le procédé selon le second volet de l'invention comprend, de préférence,
○ des moyens de télécommunication pour recevoir un segment de données numériques ainsi que d'une information d'horodatage du segment de données numériques produites dans un récepteur GNSS appliquant le procédé selon le premier volet de l'invention ;
○ un module cryptographique pour générer une réplique du code d'étalement du second signal de radionavigation crypté émis par un satellite GNSS au temps d'émission indiqué par l'information d'horodatage ;
○ un corrélateur pour évaluer une fonction de corrélation entre ledit segment de données numériques et ladite réplique du code d'étalement du second signal de radionavigation crypté ; et
○ des moyens de décision pour décider, sur la base du résultat de ladite évaluation de la fonction de corrélation, si les signaux GNSS reçus par le récepteur GNSS sont authentiques. Les moyens de décision comprennent de préférence un processeur mettant en oeuvre un algorithme de décision utilisant le résultat de la corrélation comme paramètre d'entrée.

Par « module cryptographique », on entend, dans le contexte de la présente description, un équipement électronique permettant de générer les codes d'étalement cryptés des seconds signaux de radionavigation en fonction d'une indication du temps d'émission respectif. Cet équipement électronique comprend donc les pararmètres cryptographiques correspondants ou peut du moins y accéder par une voie sécurisée.

Les moyens de télécommunication (du côté des récepteurs GNSS et/ou du côté du centre d'authentification) peuvent comprendre n'importe quel interface d'échange de données par fil ou sans fil. Ils pourraient comprendre, p.ex. une interface GSM, une interface de liaison satellitaire, un port USB permettant le transfert des informations par clé USB, une interface Bluetooth, etc.

### Brève description des dessins

D'autres particularités et caractéristiques de l'invention ressortiront de la description détaillée d'un mode de réalisation avantageux présenté ci-dessous, à titre d'illustration, avec référence aux dessins annexés. Ceux-ci montrent:
Fig. 1 : une illustration schématique d'un système permettant la mise en oeuvre d'une méthode d'authentification selon un mode d'exécution préféré de l'invention ;
Fig. 2 : un schéma d'un récepteur GNSS pouvant exécuter un procédé selon le premier volet de l'invention ;
Fig. 3 : un schéma plus détaillé de la tête HF du récepteur de la figure 2 ;
Fig. 4 : un ordinogramme d'un exemple de procédé selon le premier volet de l'invention ;
Fig. 5 : un ordinogramme d'un exemple de procédé selon le second volet de l'invention.

### Description d'une exécution préférée

Dans la suite, on présuppose un système de positionnement par satellites (GNSS) dans lequel chaque satellite émet, sur une même fréquence porteuse, un premier signal de radionavigation ouvert (c.-à-d. non crypté) et un second signal de radionavigation crypté. Les premier et second signaux de radionavigation modulent la fréquence porteuse en quadrature de phase. Le premier signal de radionavigation porte un code d'étalement dépendant du satellite émetteur ainsi qu'un message de navigation (avec des données almanach, éphémérides, temps d'émission, etc.) Le code d'étalement du second signal de radionavigation est crypté. Les paramètres cryptographiques sont supposés inconnus aux récepteurs GNSS utilisateurs. Le centre d'authentification est supposé posséder, ou du moins avoir accès à, ces paramètres.

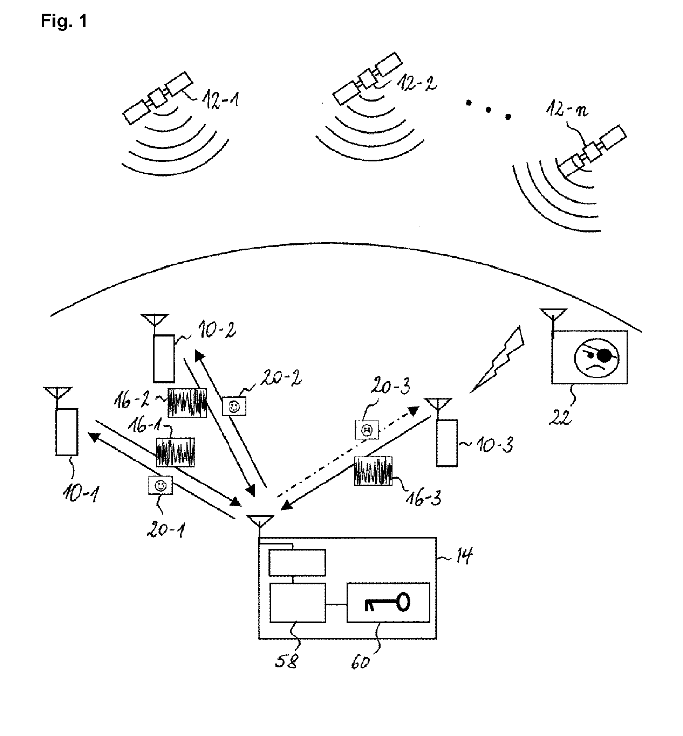

Un exemple du procédé d'authentification global (premier et second volets) est illustré schématiquement à la figure 1. Des récepteurs GNSS 10-1, 10-2, 10-3 reçoivent la bande de radiofréquences contenant les premiers et seconds signaux GNSS émis par les satellites GNSS 12-1, 12-2, ..., 12-n. Les premiers signaux (signaux ouverts) permettent aux récepteurs GNSS de calculer leur solution PVT respective, en appliquant un des procédés connus à cet effet. En outre, les récepteurs GNSS numérisent le mélange de signaux autour de la fréquence porteuse pendant un certain intervalle de temps (dont la durée est comprise, de préférence, entre 2 et 10 ms). La bande passante de l'étage HF (en anglais : « RF front end ») et la fréquence d'échantillonnage sont choisies de sorte à ce qu'aussi bien les signaux GNSS ouverts que les signaux GNSS cryptés soient convenablement représentés dans le domaine numérique. Les segments de données numériques (aussi appelés « clichés numériques » dans la suite) ainsi produits sont horodatés avec une information indicative des temps d'émission des signaux contenus dans le segment de données numériques.

Les récepteurs GNSS envoient ensuite leurs clichés respectifs (qui contiennent à la fois les signaux ouverts ayant servi à élaborer la solution PVT et les signaux cryptés) à un centre d'authentification pour vérifier l'authenticité des signaux GNSS reçus. Le centre d'authentification vérifie, pour chaque satellite observé, la présence du signal crypté associé au signal ouvert. Pour ce faire, il régénère, pour chaque satellite, le code d'étalement crypté (c.-à-d. une réplique du code d'étalement du signal crypté) au temps d'émission renseigné par l'information d'horodatage. Le centre d'authentification vérifie la présence du signal crypté émis en quadrature du signal ouvert en corrélant le segment de données numériques avec la réplique locale du code d'étalement crypté. La présence du signal crypté est un indice fort de l'authenticité du cliché numérique et donc de la solution PVT. Dans le cas d'un signal ouvert contrefait ou modifié, le signal crypté contenu dans le cliché numérique ne sera pas cohérent avec la réplique générée par le centre d'authentification.

Sur la figure 1 sont représentés des récepteurs utilisateurs 10-1, 10-2, et 10-3 qui effectuent une demande d'authentification en envoyant au centre d'authentification 14 un cliché numérique 16-1, 16-2, 16-3 des signaux qu'ils reçoivent. Le centre d'authentification 14 vérifie les clichés 16-1, 16-2, 16-3 reçus à l'aide d'un module cryptographique 60. Il envoie ensuite aux récepteurs 10-1, 10-2, et 10-3 une réponse 20-1, 20-2, 20-3 indiquant si les signaux de radionavigation contenus dans le cliché respectif sont authentiques ou non, p.ex. contrefaits par un attaquant (« spoofer ») 22.

Cette méthode permet une authentification en temps réel ou presque réel. Dans ce cas, le cliché est envoyé au centre d'authentification immédiatement après sa production dans le récepteur et le centre d'authentification envoie sa réponse dès que la vérification est terminée. Une authentification en temps différé est également possible ; dans ce cas, le cliché est enregistré sur un support de stockage et présenté au centre d'authentification à une date ultérieure.

On note que la demande d'authentification pourrait être introduite par un tiers ayant reçu le cliché numérisé du récepteur utilisateur. Cette possibilité pourrait notamment s'avérer intéressante pour le contrôle d'une flotte de véhicules, car elle permet de vérifier la position et la vitesse d'un véhicule (équipé du récepteur GNSS). D'autres applications, dans lesquelles le centre d'authentification prend le rôle de tiers de confiance, sont également concevables (p.ex. chronotachygraphie de véhicules de plus de 3,5 tonnes.)

La méthode d'authentification proposée dans le cadre de ce document présente un avantage non négligeable, puisqu'elle ne nécessite pas de modification des segments sol ou spatial (contrairement à un système d'authentification par tatouage, qui nécessiterait la modification des signaux émis par la constellation de satellites). Ce mécanisme a l'avantage de délester le récepteur GNSS du fardeau de la gestion et de la protection des paramètres cryptographiques. De coûteuses mesures de protection des paramètres cryptographiques des signaux cryptés ne sont donc pas nécessaires au niveau du récepteur GNSS.

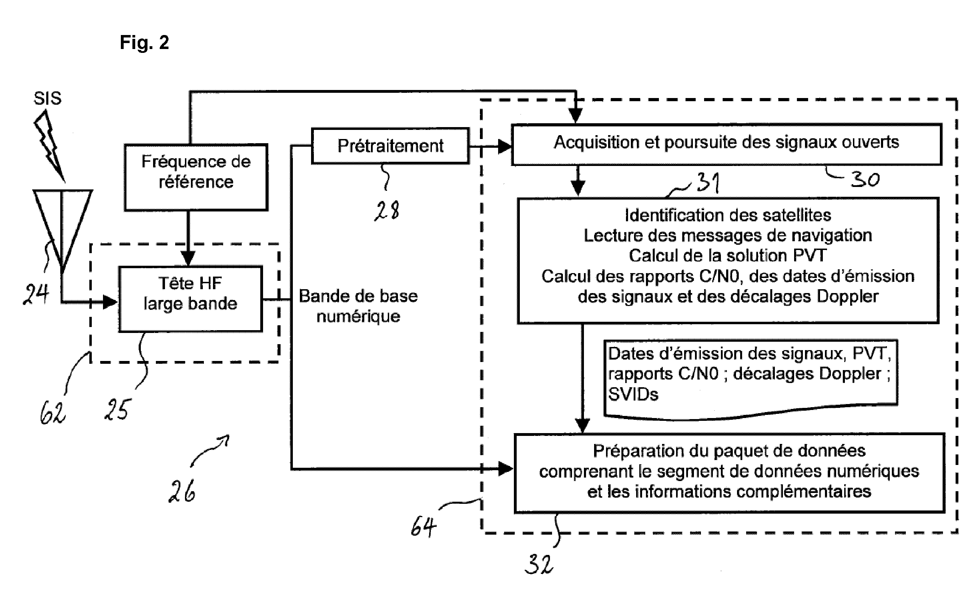

L'architecture globale d'un récepteur GNSS configuré pour réaliser un procédé selon le premier volet de l'invention est présentée à la figure 2. Ce récepteur comprend une antenne 24 (p.ex. une antenne patch), un étage HF (ou « tête HF ») large bande 25 pour la réception du signal-dans-l'espace SIS (de l'anglais : « signal in space ») et une chaîne de traitement du signal 26.

L'étage HF 25 a pour fonction de réceptionner le signal global (c.-à-d. la bande de fréquences occupée par les signaux ouverts et les signaux cryptés), de le filtrer, puis de le descendre en fréquence et de le numériser (échantillonnage et quantification). Le signal produit en sortie de l'étage HF est fourni à l'étage suivant sous forme numérique en bande de base (BB). La fréquence d'échantillonnage est choisie suffisamment haute pour que le théorème de Nyquist-Shannon soit respecté (c.-à-d. égale ou supérieure à la largeur de la bande de fréquences).

Un étage de prétraitement 28 est ménagé dans la chaîne de traitement du signal pour réajuster le spectre et la fréquence d'échantillonnage du signal en amont de l'étage d'acquisition et de poursuite 30 des signaux ouverts.

L'étage de traitement numérique 31 du signal ouvert est modifié par rapport à l'étage correspondant d'un récepteur GNSS classique. L'étage de traitement numérique 31 produit non seulement une solution PVT comme un étage de traitement numérique classique mais sort aussi les dates d'émission des signaux en provenance des différents satellites, les rapports signal à bruit C/N₀ des signaux ouverts, leurs décalages Doppler ainsi que les identificateurs (SVIDs) des satellites observés (en anglais : « space vehicle identifier »).

Une cache 32 permettant de préparer les paquets de données contenant les clichés numériques, l'information d'horodatage (les dates d'émission), la solution PVT, les rapports C/N₀, les décalages Doppler ainsi que les SVIDs est également ménagée dans le récepteur GNSS. Si une authentification en différé est souhaitée, le récepteur comprend en outre une mémoire de stockage.

Outre les éléments de la figure 2, le récepteur 10 comprend des moyens de communication pour entrer en communication avec le centre d'authentification 14 ou un tiers.

Dans la suite, à titre d'illustration, il sera supposé que les signaux ouverts et les signaux cryptés possèdent les mêmes caractéristiques spectrales que les signaux Galileo OS L1 et les signaux Galileo PRS L1, respectivement. Ces signaux sont transmis en quadrature de phase sur la fréquence centrale de la bande L1, c.-à-d. sur 1575,42 MHz. Les signaux Galileo OS L1 comprennent une modulation BOC(1 ; 1) (intégrée dans une modulation composite CBOC(6 ; 1)), les signaux Galileo PRS L1 une modulation BOC(15 ; 2,5).

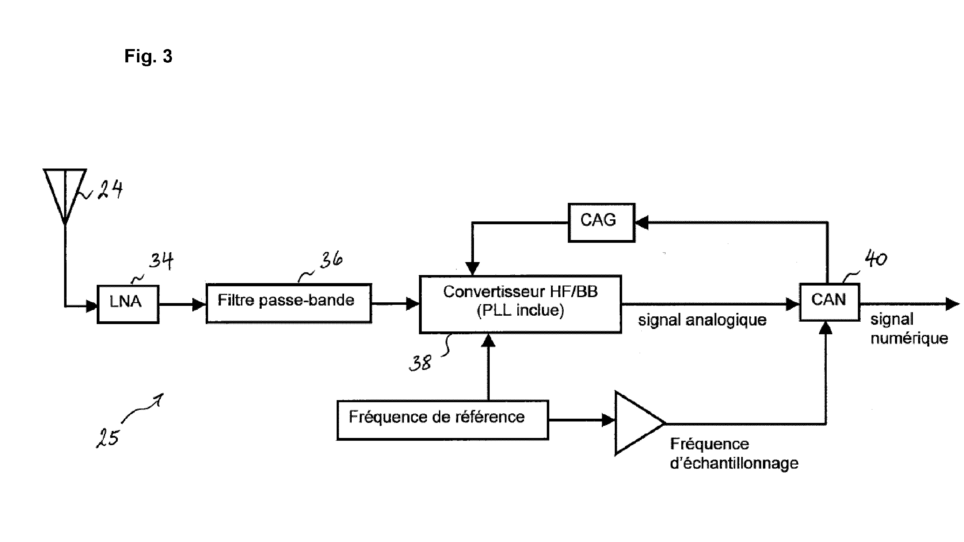

Une architecture type d'étage HF 25 est donnée à la figure 3. L'antenne 24 est conçue de sorte à laisser passer le spectre utile. L'étage HF 25 descend le signal à une fréquence plus basse pour en faciliter le traitement, puis le numérise. L'architecture comprend tout d'abord un amplificateur à bruit faible 34 (LNA, « Low Noise Amplifier »), qui amplifie le signal très faible en provenance de l'antenne. Le signal est ensuite filtré par un filtre passe-bande 36 afin de n'en garder que le spectre utile (spectre des signaux ouverts et cryptés) et descendu en fréquence par un convertisseur de fréquence 38. Pour finir, le signal en bande de base est échantillonné par un convertisseur analogique-numérique (CAN) 40 et quantifié (sur 1, 2 ou 3 bits - voire plus).

Plusieurs architectures d'étage HF sont connues et pourraient être utilisées dans un récepteur selon l'invention :
○ « Direct RF Sampling » : échantillonnage directement à la fréquence HF, puis conversion en BB dans le domaine numérique ;
○ Homodyne : le signal est converti en BB de manière directe, sans fréquences intermédiaires, puis échantillonné ;
○ Superhétérodyne : le signal est converti en BB en passant par différentes fréquences intermédiaires, puis échantillonné ;
○ « Low-IF » : le signal est converti à une fréquence intermédiaire basse, puis échantillonné ; le passage en BB se fait numériquement.

Une architecture de type superhétérodyne (classique pour un récepteur GNSS) est préférée dans le cadre de cet exemple, car elle permet une grande sélectivité et une grande sensibilité. Sa fabrication est par ailleurs connue et bien maîtrisée.

Avec les hypothèses relatives aux spectres des signaux GNSS énoncées ci-dessus, 85,57% de la puissance de la composante BOC(1 ; 1) du signal ouvert (modulation est contenue dans une bande de 4 MHz autour de la fréquence centrale, tandis que 92,51% de la puissance totale du signal se trouve dans une bande de 8 MHz (d'après « Filter Design Considerations for Acquisition of BOC-Modulated Galileo Signals, » A. Brian et al. 2009.) Pour la composante BOC(1, ; 1) du signal ouvert, un filtre à bande étroite en entrée de la tête HF 25 serait suffisant. Cependant, cette bande étroite ne contient qu'une très faible partie du signal crypté (modulation BOC(15 ; 2,5)). Une quote-part de 77,45% de la puissance du signal crypté est incluse dans une bande de 40 MHz autour de la fréquence centrale. On passe à 79.75% de la puissance totale pour une bande passante de 60 MHz. Un filtre HF de bande assez large (p.ex. environ 40 MHz ou plus) est donc placé en entrée de l'étage HF afin de ne pas éliminer le signal crypté.

Le récepteur utilisateur échantillonne la bande de fréquences reçues, produisant ainsi un segment de données numériques qui est envoyé au centre d'authentification. Le convertisseur analogique-numérique reçoit le signal analogique transposé en fréquence et l'échantillonne pendant la durée de l'observation. Dans le segment de données numériques se trouvent (si la fréquence d'échantillonnage et la bande passante de la tête HF sont adéquates) tous les signaux émis par les satellites en vue dans la bande de fréquences visée.

Comme indiqué ci-dessus, le spectre du mélange de signaux à échantillonner est réparti sur une bande de fréquences de 40 MHz. Le mélange de signaux étant traité en bande de base, sa fréquence haute est de 20 MHz. Afin de respecter le théorème de Nyquist-Shannon, la fréquence d'échantillonnage du signal utile doit donc être d'au minimum 40 MHz dans cet exemple.

Afin de préserver le signal crypté dans le signal fourni par la tête HF et le CAN, la fréquence d'échantillonnage du signal est plus élevée que dans le cas d'un récepteur GNSS ne traitant que le signal ouvert. Cette haute fréquence d'échantillonnage n'est donc pas nécessaire pour la partie classique du récepteur (boucle d'acquisition et de poursuite) basée sur le signal ouvert (et, dans cet exemple, sa modulation BOC(1 ; 1)). Pour rappel, une bande passante de 8 MHz centrée sur la fréquence porteuse contient 92,51 % de la puissance de la composante BOC(1 ; 1) du signal ouvert. Une fréquence d'échantillonnage de 2 x 4 MHz = 8 MHz est donc en théorie suffisante (certains récepteurs travaillent même avec une bande passante de seulement 4 Mhz). Une fréquence d'échantillonnage plus haute a pour conséquence directe sur le récepteur une augmentation du nombre d'opérations (et donc du temps de calcul) et du besoin en mémoire interne. De plus, une largeur de bande plus grande implique un impact du bruit plus important, et donc un taux d'erreur binaire plus élevé. Dans le cas de notre exemple de signal ouvert, un filtre de largeur de bande de 8 MHz, et une fréquence d'échantillonnage de 16 MHz sont en théorie suffisants. Il est donc souhaitable de prévoir un étage de prétraitement du signal (numéro 28 sur la figure 1) dans lequel le signal à large bande numérisé produit par la tête HF est filtré une nouvelle fois pour la bande passante réduite voulue, et de le sous-échantillonner avant de l'appliquer à l'étage d'acquisition et de poursuite.

Un récepteur GNSS connaît deux principales phases de fonctionnement :
○ Une phase d'acquisition : au démarrage, le récepteur ne connaît ni les satellites visibles (« cold start »), ni les décalages de code et doppler des signaux reçus.
○ Une phase de poursuite : une fois la phase d'acquisition effectuée, le récepteur connaît les satellites visibles, et les décalages de code et doppler à une faible erreur près ; il poursuit ses signaux en affinant les décalages de code et doppler.

Afin de permettre le rejeu du code crypté présent dans le segment de données numériques au niveau du centre d'authentification, les données suivantes (aussi appelées « informations complémentaires ») sont utilisées pour chaque satellite observé :
○ Le numéro du code d'étalement employé par le satellite (renseigné de manière biunivoque par l'identificateur du satellite),
○ La date d'émission du signal au niveau du satellite, et
○ Le décalage doppler du signal reçu au niveau du récepteur.

Ces paramètres sont connus lorsque le récepteur GNSS se trouve en phase poursuite.

Uniquement la date d'émission du signal au niveau du satellite est strictement nécessaire comme information complémentaire au segment de données numériques dont le centre d'authentification a besoin pour vérifier le paquet de données transmis par le récepteur GNSS. En effet, l'identification des satellites est possible à partir du segment de données numériques, par corrélation du segment avec les différents codes d'étalement du signal ouvert, en testant à chaque fois différentes hypothèses pour le décalage Doppler. La transmission de ces informations supplémentaires permet, cependant, de réduire le nombre des opérations que doit mettre en oeuvre le centre d'authentification. Si les SVIDs sont renseignés au centre d'authentification, celui-ci peut immédiatement produire les répliques des codes cryptés que le récepteur GNSS a effectivement reçus ou qu'il aurait dû recevoir. Si le décalage Doppler est également renseigné au centre d'authentification, il peut simuler le décalage Doppler correspondant sur les répliques du code crypté, ce qui augmente la probabilité de détecter un pic de corrélation.

Le décalage Doppler observé par le récepteur GNSS utilisateur est dû au mouvement relatif entre le satellite et le récepteur. La valeur du décalage Doppler fournie au centre d'authentification pourrait cependant être faussée par une dérive de l'horloge interne du récepteur GNSS. Si cette erreur d'horloge peut faire tomber le maximum du pic de corrélation en dessous du seuil de détection, le centre d'authentification peut tenir compte de cette source d'erreur en testant plusieurs hypothèses de décalage Doppler endéans les limites d'une plage de valeurs correspondant à la dérive d'horloge de récepteur maximale tolérée.

Afin de dater l'instant d'émission des signaux contenus dans le segment de données numériques, la méthode préférée est la suivante : lors de la réception d'un message de navigation d'un signal ouvert SOᵢ (i identifiant le satellite émetteur) le récepteur GNSS lit et mémorise le temps d'émission du message de navigation T_{MessNav,i} (contenu dans le message de navigation), et compte le nombre de bribes de code du signal ouvert SOᵢ reçus jusqu'à un temps de référence (p.ex. le début ou la fin) de l'enregistrement du segment de données numériques. Connaissant la durée T_{C} d'une bribe, il est possible au récepteur GNSS de dater précisément l'instant d'émission du signal ouvert enregistré : T_{émission,i} = T_{messNav,i} + mᵢ * T_{C}, où T_{émission,i} est le temps d'émission cherché du signal ouvert SOᵢ et mᵢ le nombre de bribes comptées. Ce procédé est de préférence mis en oeuvre pour tous les signaux ouverts SOᵢ. On note qu'aussi bien les temps d'émission du message de navigation T_{MessNav,i} que le nombre de bribes comptées mᵢ est normalement différent pour chaque satellite. L'information d'horodatage peut être donnée sous la forme de l'ensemble des valeurs T_{émission,i} ou sous une autre forme de teneur identique (par exemple le temps de réception en combinaison avec les délais de propagation).

Dans le cadre d'une mise en oeuvre de l'invention, chaque satellite émet de préférence les bribes du code d'étalement du signal crypté de manière synchrone avec les bribes du code d'étalement du signal ouvert (les fronts montants des bribes du signal ouvert coïncidant avec les fronts montants des bribes du signal crypté). Comme il est possible de d'indiquer les dates d'émission (d'horodater au sens de ce document) le segment de données numériques à la bribe du code ouvert près, le fait que les fronts des codes ouvert et crypté sont synchronisés permet de dater indirectement l'émission (horodater au sens de ce document) le segment de données numériques à la bribe du code crypté près.

La taille (V) d'un segment de données numériques dépend de plusieurs facteurs : la durée de l'intervalle de temps pendant lequel l'échantillonnage est effectué (Δt), la fréquence d'échantillonnage (Fₑ) et la quantification (n_{b} = nombre de bits de codage). La formule est : V = Fₑ*Δt*n_{b}. Pour une durée d'observation de 4 ms (= Δt), avec Fₑ = 40 MHz et une quantification sur 2 bits, on a V = 320 kbits = 40 ko. Dans le cas d'une vérification différée, si le récepteur stocke un segment de données numériques toutes les minutes, 57,6 Mo seront nécessaires pour stocker les données sur une journée.

Si le rapport C/N_{O} est faible, il pourrait être utile d'augmenter la durée du segment de données numériques pour augmenter la robustesse de la vérification effectuée par le centre d'authentification. A l'inverse, un bon rapport C/N₀ pourrait permettre de réduire la période d'observation.

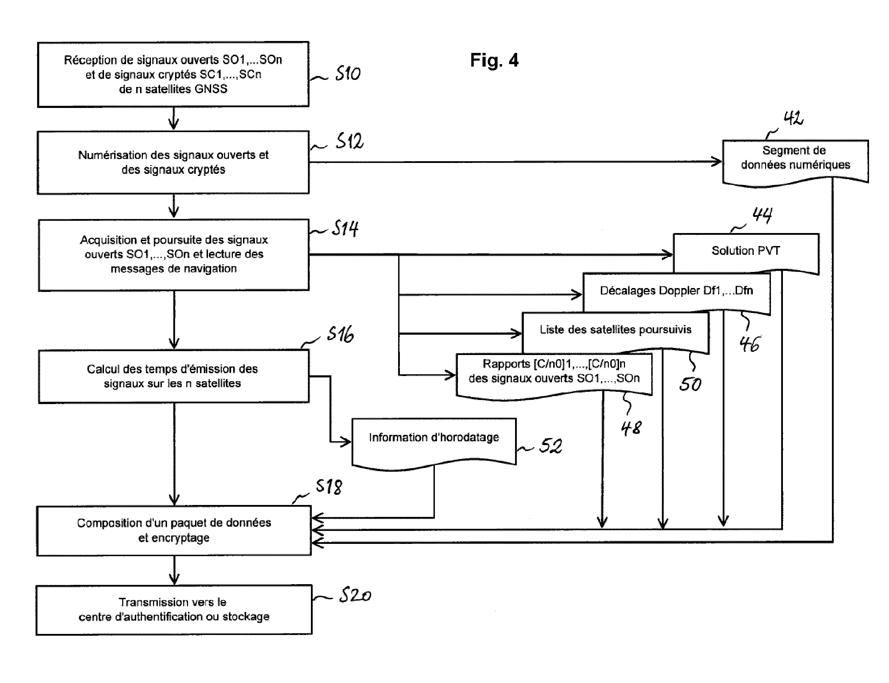

L'exemple du procédé selon le premier volet de l'invention et discuté dans le cadre de cette description détaillée, est schématiquement résumé à la figure 4. A l'étape S10, le récepteur GNSS reçoit une bande de fréquences contenant les signaux ouverts SOᵢ et les signaux cryptés SCᵢ (où i identifie les n satellites en visibilité depuis le récepteur). Pendant un intervalle de temps de durée Δt, le récepteur numérise cette bande de fréquences (étape S12), produisant ainsi le segment de données numériques (ou cliché numérique) 42. En outre, le récepteur acquiert et poursuit les signaux GNSS ouverts SOᵢ, et lit le message de navigation (étape S14). Il calcule notamment la solution PVT 44, les décalages Doppler Dfᵢ 46 et les rapports signal à bruit [C/N₀]ᵢ 48 des signaux ouverts. En outre, cette étape permet d'obtenir une liste des satellites émetteurs des signaux reçus 50. A l'étape S16, le récepteur calcule les dates d'émission des signaux (de préférence par comptage de bribes comme indiqué plus haut) et stocke l'information d'horodatage 52 correspondante (p.ex. l'ensemble des valeurs T_{émission,i}). Le cliché numérique 42, la solution PVT 44, l'ensemble des décalages Doppler 46, les rapports C/N₀, la liste des satellites 50 ainsi que l'information d'horodatage sont assemblées en un paquet de données (étape S18). De préférence, le paquet est encrypté (p.ex. avec la clef publique du centre d'authentification.) Le paquet de données est ensuite stocké (pour une vérification ultérieure) ou envoyé au centre d'authentification (étape S20.) Une alternative est la transmission à un tiers qui peut lui aussi choisir entre une vérification immédiate ou en différé.

L'architecture du centre d'authentification 14 est illustrée schématiquement à la figure 1. Le centre d'authentification 14 comprend une interface de communication 56 pour communiquer avec les récepteurs GNSS ou les autres requérants d'une authentification, un processeur 58 programmé pour le traitement des demandes d'authentification et un module cryptographique 60, qui gère les paramètres cryptographiques relatifs au signal de radionavigation crypté. Le module cryptographique est capable de générer une réplique locale du code crypté pour chaque satellite pour le temps d'émission fourni par le récepteur utilisateur. Ce temps est intrinsèquement lié à la position estimée par celui-ci. En corrélant le segment de données numériques avec une réplique locale du code d'étalement crypté, on vérifie la cohérence des temps, et donc la cohérence des positions. Il n'est donc pas nécessaire d'exploiter à nouveau l'information de position fournie par les corrélateurs.

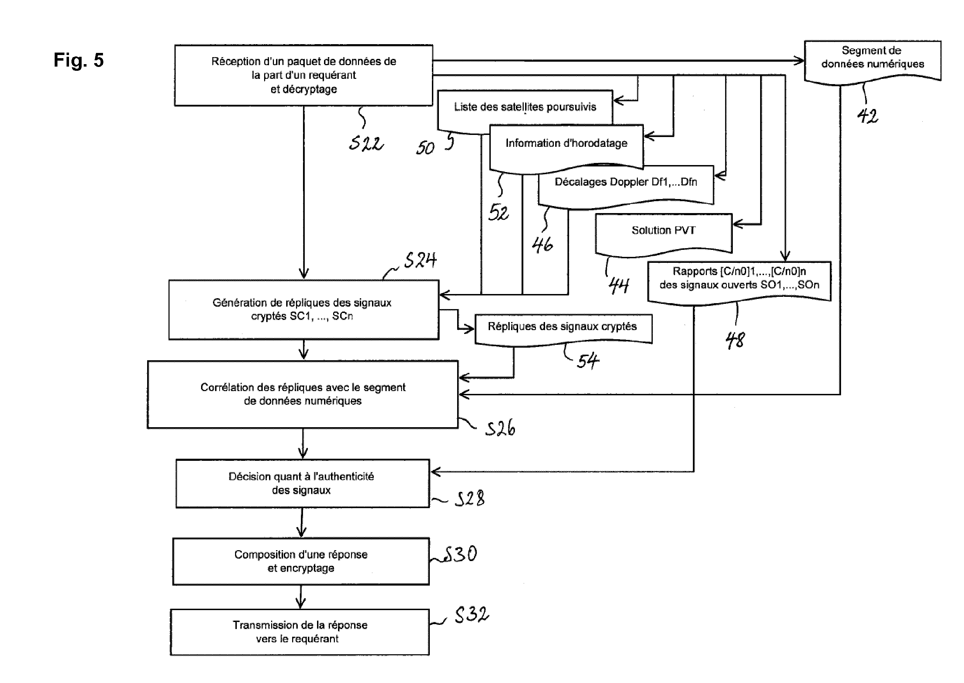

Un exemple du procédé de vérification de l'authenticité des signaux GNSS (second volet de l'invention) est schématiquement illustré à la figure 5. Le centre d'authentification reçoit, à l'étape S22, le paquet de données contenant le cliché numérique 42 et les informations complémentaires 44, 46, 48, 50, 52 de la part du requérant de l'authentification (le récepteur GNSS ou un tiers). Si nécessaire, le paquet est décrypté (p.ex. avec la clef privée du centre d'authentification) pour permettre l'accès au contenu.

Le centre d'authentification génère ensuite (étape S24) des répliques du code d'étalement des signaux cryptés 54. A cette fin, il utilise un module cryptographique en appliquant comme paramètres d'entrée la liste des satellites poursuivis (identifiant quels codes cryptés doivent être générés), l'information d'horodatage (indiquant la date d'émission de chaque signal crypté et donc quel segment du code crypté doit être généré) et les décalages Doppler enregistrés par le récepteur GNSS. Les valeurs du décalage Doppler permettent de transposer les répliques du code d'étalement des signaux cryptés en fréquence de sorte à minimiser l'écart en fréquence entre chaque réplique et le signal correspondant enregistré dans le segment de données numériques.

Ensuite, chaque réplique de code d'étalement de signal crypté est corrélée avec le segment de données numériques (étape S26). En principe, aucune recherche de décalage Doppler ou de décalage de code n'a besoin d'être effectuée à cette étape. En effet :
○ le décalage Doppler du signal ouvert est mesuré et transmis par le récepteur utilisateur via les informations complémentaires ; le signal crypté est affecté du même décalage Doppler, il n'y a donc en théorie pas de décalage Doppler à rechercher ;
○ le temps d'émission du signal étant connu par le centre d'authentification à la bribe près, il n'y a théoriquement pas de décalage entre la réplique locale et le signal enregistré dans le cliché numérique.
Pour plus de robustesse, le centre d'authentification peut toutefois tenir compte d'un léger décalage en fréquence (résultant p.ex. d'une dérive de l'horloge du récepteur GNSS) ou en bribes. Il sera apprécié que même dans ce cas, l'espace de recherche soit limité à une plage de fréquences correspondant à la dérive d'horloge maximale tolérée et à un écart de quelques (< 10) bribes du code crypté.

A l'étape S28, une décision quant à l'authenticité des signaux est prise par le centre d'authentification. La présence des signaux cryptés attendus (prédits par la liste des satellites poursuivis et l'information d'horodatage) dans le cliché numérique 42 est un indicateur de l'authenticité de signaux GNSS reçus par le récepteur ayant enregistré le cliché numérique. Un signal crypté SCᵢ est réputé détecté si le résultat de la corrélation entre la réplique de code correspondante et le cliché numérique dépasse un certain seuil prédéterminé. Comme il y a plusieurs signaux cryptés par cliché numérique, il peut arriver que certains des signaux attendus ne puissent être détectés par le centre d'authentification. Si un très haut niveau de sécurité (c.-à-d. une très faible probabilité d'authentification à tort) doit être assuré, le centre d'authentification sera configuré à rejeter tout le paquet de donnés comme non valide. Une approche aussi stricte peut toutefois entraîner un taux d'échec d'authentification élevé non justifié. De préférence, le centre d'authentification est donc configuré pour adopter une approche plus souple qui tient compte des différents résultats de corrélation et en déduit un indicateur global d'authenticité. On note qu'une réduction de la probabilité de fausse authentification (authentification à tort) est inévitablement accompagnée d'une augmentation de la probabilité d'une authentification manquée à tort. Le seuil en dessous duquel l'authentification est considérée échouée représente donc un compromis, qui est ajusté en fonction des besoins des utilisateurs.

Dans l'exemple illustré à la figure 5, les rapports de signal à bruit des signaux ouverts 48 mesurés par le récepteur utilisateur (notés C_{SOi}/N₀) sont disponibles dans le centre d'authentification. Celui-ci peut mesurer le rapport signal à bruit des signaux cryptés (C_{SCi}/N₀) dans le cliché numérique 42. Le rapport mesuré (C_{SOi}/N₀)/(C_{SCi}/N₀) = C_{SOi}/C_{SCi} compare la puissance du signal ouvert reçu à la puissance du signal crypté reçu. Or, ce rapport doit correspondre au rapport des deux signaux à l'émission, qui est fixe et connu. Un écart significatif du rapport mesuré de la valeur théorique peut être un indice d'une attaque de leurrage. De préférence, le centre d'authentification tient donc compte des rapports (C_{SOi}/N₀)/(C_{SCi}/N₀) lors de la prise de décision S28.

Une fois l'authenticité constatée ou rejetée, le centre d'authentification compose un message de réponse au requérant (étape S30). Eventuellement, le message de réponse est encrypté (p.ex. avec la clef publique du requérant) avant la transmission (étape S32).

Le signal crypté associé à un satellite peut être modulé par un signal contenant un message de navigation. Si, sur la durée d'enregistrement du segment de données numériques, le bit du message de navigation passe de -1 à +1 ou inversement, le code crypté va s'inverser, faussant le résultat de la corrélation (on parle alors d'intégration destructive). Une des solutions possibles est d'effectuer l'intégration en plusieurs fois, p.ex. séparément sur deux intervalles contigus dont la longueur est à chaque fois la moitié de la durée d'un symbole du message de navigation. De cette façon, on est sûr qu'au moins un des deux intervalles ne contient pas d'inversion de symbole.

Un aspect du récepteur non encore discuté jusqu'ici concerne les mesures de sécurité mises en place sur un récepteur GNSS afin d'éviter une manipulation malintentionnée des paquets de données afin d'obtenir l'authentification de paquets corrompus. A la figure 2, deux types de périmètres sont illustrés :
○ le périmètre 62 dit « sensible », qui encadre les éléments dont la modification pourrait entraîner l'impossibilité de l'authentification sans que le PVT du signal ouvert ne soit affecté ;
○ le périmètre 64 dit « de sécurité », qui encadre les éléments dont la modification pourrait permettre l'authentification de signaux à tort.

La tête HF appartient au périmètre sensible 62 : une réduction de sa bande passante empêcherait le signal crypté de se trouver dans le segment sélectionné ; toute authentification demandée au centre d'authentification apparaîtra dès lors comme manquée.

Le module d'acquisition et de poursuite, l'étage de traitement numérique ainsi que l'espace de stockage appartiennent au périmètre de sécurité 64 : une personne malintentionnée pourrait en effet, par exemple, essayer de modifier les données stockées en remplaçant les segments de données numériques par des données incluant un signal crypté valide (p.ex. des données préenregistrées à une autre date et dans un autre lieu). Des manipulations de ce type sont évitées grâce au périmètre de sécurité, c.-à-d. des mesures de protection des matériels contre toute tentative d'intrusion. Le périmètre de sécurité est une zone dédiée dans laquelle l'ensemble des fonctions de sécurité sont réalisées et les paramètres cryptographique sont stockés. Cette zone protège les biens de sécurité (fonctions, paramètres) en confidentialité, intégrité et disponibilité. Typiquement, un microprocesseur sécurisé matérialise le périmètre de sécurité.

## Revendications

1. Procédé de traitement de signaux de radionavigation, comprenant la réception d'une bande de radiofréquences contenant un mélange de signaux de radionavigation en provenance d'une pluralité de satellites, à chaque fois un premier signal de radionavigation et un second signal de radionavigation crypté provenant d'un même satellite et modulant une même fréquence porteuse en quadrature de phase l'un par rapport à l'autre ;
la numérisation du mélange de signaux de radionavigation de sorte à produire un segment de données numériques représentant un intervalle de temps du mélange de signaux de radionavigation à la réception ; et
la production d'une information d'horodatage du segment de données numériques ;
**caractérisé en ce que** ladite information d'horodatage est indicative des temps d'émission, sur les différents satellites de la pluralité de satellites, des signaux de radionavigation reçus pendant ledit intervalle de temps.

2. Procédé selon la revendication 1, dans lequel la production de l'information d'horodatage comprend :
la lecture d'une information de temps d'émission contenue dans un message de navigation du premier signal de radionavigation de chaque satellite de ladite pluralité de satellites et
pour chaque satellite de ladite pluralité de satellites, la détermination d'un décalage entre l'intervalle de temps représenté par le segment de données numériques et le message de navigation respectif.

3. Procédé selon la revendication 1 ou 2, comprenant la composition d'un paquet de données, comprenant ledit segment de données numériques, ladite information d'horodatage, et une identification des satellites de ladite pluralité de satellites.

4. Procédé selon la revendication 3, comprenant la transmission dudit paquet de données à un centre d'authentification pour la vérification de la cohérence des composantes du paquet de données.

5. Procédé selon la revendication 4, comprenant la réception d'une réponse dudit centre d'authentification indiquant si les signaux de radionavigation sont authentiques ou non.

6. Procédé selon l'une quelconque des revendications 1 à 5, comprenant, pour chaque satellite de ladite pluralité de satellites, la détermination d'une valeur indicative du décalage Doppler des signaux en provenance du satellite respectif.

7. Procédé selon la revendication 6 si dépendante de la revendication 3, dans lequel lesdites valeurs indicatives du décalage Doppler sont incluses dans ledit paquet de données.

8. Procédé selon l'une quelconque des revendications 1 à 7, comprenant, pour chaque satellite de ladite pluralité de satellites, la détermination d'un rapport signal à bruit pour le premier signal en provenance du satellite respectif.

9. Procédé selon la revendication 8 si dépendante de la revendication 3, dans lequel lesdits rapports signal à bruit sont inclus dans ledit paquet de données.

10. Procédé selon l'une quelconque des revendications 1 à 9, dans lequel une information de position, de vitesse et/ou de temps est déterminée sur la base au moins desdits premiers signaux de radionavigation, ladite information de position, de vitesse et/ou de temps étant, le cas échéant, incluse dans le paquet de données.

11. Récepteur de signaux de radionavigation **caractérisé en ce qu'il** est configuré pour la mise en oeuvre du procédé selon l'une quelconque des revendications 1 à 10, le récepteur comprenant
un étage HF pour recevoir une bande de radiofréquences contenant un mélange de signaux de radionavigation en provenance d'une pluralité de satellites, à chaque fois un premier signal de radionavigation et un second signal de radionavigation crypté provenant d'un même satellite et modulant une même fréquence porteuse en quadrature de phase l'un par rapport à l'autre ;
un convertisseur analogique-numérique configuré pour numériser le mélange de signaux de radionavigation de sorte à produire un segment de données numériques représentant un intervalle de temps du mélange de signaux de radionavigation à la réception ;
un étage d'acquisition et de poursuite au moins des premiers signaux de radionavigation ; et
un étage de traitement numérique configuré pour lire une information de temps d'émission contenue dans le message de navigation du premier signal de radionavigation de chaque satellite de ladite pluralité de satellites et pour déterminer, pour chaque satellite de ladite pluralité de satellites, un décalage entre l'intervalle de temps représenté par le segment de données numériques et le message de navigation respectif ;
le récepteur étant configuré pour produire une information d'horodatage du segment de données numériques, ladite information d'horodatage étant indicative des temps d'émission, sur les différents satellites de la pluralité de satellites, des signaux de radionavigation reçus pendant ledit intervalle de temps.

12. Récepteur selon la revendication 11, comprenant des moyens de télécommunication pour transmettre un paquet de données, contenant ledit segment de données numériques, ladite information d'horodatage, et une identification des satellites de ladite pluralité de satellites, à un centre d'authentification pour la vérification de la cohérence des composantes du paquet de données et pour recevoir une réponse dudit centre d'authentification indiquant si les signaux de radionavigation sont authentiques ou non.

13. Procédé de vérification de l'authenticité de signaux GNSS reçus par un récepteur GNSS, comprenant
la réception, par une voie de télécommunication, d'un segment de données numériques ainsi que d'une information d'horodatage du segment de données numériques produites dans ledit récepteur GNSS selon le procédé selon l'une quelconque des revendications 1 à 12 ;
la génération, à l'aide d'un module cryptographique, d'une réplique du code d'étalement du second signal de radionavigation crypté émis par un satellite GNSS au temps d'émission indiqué par l'information d'horodatage ;
l'évaluation d'une fonction de corrélation entre ledit segment de données numériques et ladite réplique du code d'étalement du second signal de radionavigation crypté ;
la décision quant à l'authenticité des signaux GNSS reçus par ledit récepteur GNSS sur la base du résultat de ladite évaluation de la fonction de corrélation.

14. Procédé selon la revendication 13, dans lequel le segment de données numériques ainsi que l'information d'horodatage du segment de données numériques, sont reçus dans un paquet de données comprenant en outre une identification des satellites de ladite pluralité de satellites desquels le récepteur GNSS a reçu des signaux GNSS,
et, optionnellement, une valeur indicative du décalage Doppler des signaux en provenance du satellite respectif et/ou, pour chaque satellite de ladite pluralité de satellites, un rapport signal à bruit pour le premier signal en provenance du satellite respectif.

15. Procédé selon la revendication 13 ou 14, comprenant la transmission, audit récepteur GNSS, d'une réponse indiquant si les signaux de radionavigation sont authentiques ou non.

16. Centre d'authentification configuré pour exécuter le procédé selon l'une quelconque des revendications 13 à 15, comprenant
des moyens de télécommunication pour recevoir un segment de données numériques ainsi qu'une information d'horodatage du segment de données numériques produite dans ledit récepteur GNSS selon le procédé selon l'une quelconque des revendications 1 à 12 ;
un module cryptographique pour générer une réplique du code d'étalement du second signal de radionavigation crypté émis par un satellite GNSS au temps d'émission indiqué par l'information d'horodatage ;
un corrélateur pour évaluer une fonction de corrélation entre ledit segment de données numériques et ladite réplique du code d'étalement du second signal de radionavigation crypté ; et
des moyens de décision pour décider, sur la base du résultat de ladite évaluation de la fonction de corrélation, si les signaux GNSS reçus par ledit récepteur GNSS sont authentiques.
